(19) Europäisches Patentamt
European Patent Office
Office européen des brevets

(11) **EP 2 904 291 B1**

(12) **FASCICULE DE BREVET EUROPEEN**

(45) Date de publication et mention
de la délivrance du brevet:
**21.12.2016 Bulletin 2016/51**

(21) Numéro de dépôt: **13774647.5**

(22) Date de dépôt: **08.10.2013**

(51) Int Cl.:
*F16G 1/28* *(2006.01)*        *F16G 5/20* *(2006.01)*

(86) Numéro de dépôt international:
**PCT/EP2013/070915**

(87) Numéro de publication internationale:
**WO 2014/056892 (17.04.2014 Gazette 2014/16)**

(54) **COURROIE DE TRANSMISSION DE PUISSANCE AVEC FILM THERMOPLASTIQUE COMPRENANT UN ELASTOMERE SILICONE.**

ANTRIEBSRIEMEN MIT THERMOPLASTISCHER FOLIE MIT EINEM SILIKONELASTOMER

POWER TRANSMISSION BELT WITH THERMOPLASTIC FILM CONTAINING A SILICONE ELASTOMER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.10.2012 FR 1259550**

(43) Date de publication de la demande:
**12.08.2015 Bulletin 2015/33**

(73) Titulaire: **Hutchinson SA**
**75908 Paris (FR)**

(72) Inventeurs:
• **ROGNON, Julie**
**F-37540 Saint Cyr Sur Loire (FR)**

• **GRELLIER, Marc**
**F-37250 Sorigny (FR)**
• **DROUVROY, Jacques**
**F-45120 Corquilleroy (FR)**

(74) Mandataire: **Gevers & Orès**
**41 avenue de Friedland**
**75008 Paris (FR)**

(56) Documents cités:
**DE-A1-102008 055 497        DE-A1-102008 055 530**
**US-A- 3 871 946**

**Description**

La présente invention concerne une courroie de transmission de puissance.

Cette courroie peut être une courroie nervurée, dont la nervure est trapézoïdale ou striée, par exemple à nervure en forme de V. Cette courroie peut également être une courroie crantée également dite synchrone.

Les nervures d'une telle courroie, qui sont composées de caoutchouc vulcanisé, présentent des faces destinées à être mises en contact direct avec une poulie menante et les poulies des accessoires entraînés par un moteur. Ces nervures forment la denture formées dans la gomme de la courroie.

Les systèmes entraînés par ce type de courroie sont utilisés dans de nombreux domaines tels que l'industrie, l'électroménager ou l'automobile.

Ce type de courroie doit répondre à de nombreuses contraintes simultanément. On peut citer les contraintes thermiques, mécaniques et plus récemment, les contraintes acoustiques. On peut noter un accroissement permanent du niveau de ces contraintes.

On connaît des courroies de transmission de puissance dont la gomme est réalisée en matériau polybutadiène et chloroprène (ou BR/CR pour Polybutadiene Rubber/Chloroprene Rubber selon la terminologie anglo-saxonne).

Ce matériau permet de répondre à certaines des contraintes mentionnées précédemment, notamment les contraintes mécaniques et acoustiques.

Cependant, ce matériau n'offre pas une tenue suffisante pour des températures élevées.

En effet, une contrainte de température trop élevée se traduit par une bakélisation de la courroie qui ne peut plus fonctionner correctement.

DE 10 2008 055 530 divulgue une courroie de transmission selon le préambule de la revendication 1.

On connaît des courroies de transmission de puissance dont la denture est réalisée en un matériau éthylène-propylène-diène monomère (plus connu sous l'acronyme EPDM). C'est par exemple le cas dans la demande de brevet FR-2 779 731 où la courroie présente également un câblé.

Ce matériau, contrairement au matériau BR/CR, présente de bonnes propriétés de tenue thermique.

Cependant, il présente un coefficient de frottement avec les poulies qui est relativement élevé. Or, un coefficient de frottement élevé peut générer des contraintes mécaniques de cisaillement importantes à l'interface entre la gomme et le câblé. Ces contraintes mécaniques peuvent ainsi conduire à l'arrachement du câblé ou parfois, à l'arrachement de la denture.

De plus, un coefficient de frottement trop élevé peut générer un niveau de bruyance (acoustique) ne répondant pas aux exigences de plus en plus importantes imposées par les clients.

De nombreuses solutions ont donc cherché à régler ces problèmes d'arrachement de câblé et de bruyance sur les courroies dont la denture est réalisée en un matériau à base d'EPDM.

A cet effet, les documents FR 2 898 171 et FR 2 936 291 proposent d'ajouter un film protecteur sur la surface externe des dentures susceptible d'être réalisée en EPDM, lequel film est destiné à être mis en contact avec les poulies.

Plus précisément, la demande FR 2 898 171 montre la présence d'un film thermoplastique contenant du polyéthylène. Cependant, dans certains cas de fortes contraintes thermomécaniques, ce film peut s'abraser rapidement et ainsi ne plus remplir sa fonction.

Dans la demande FR 2 936 291, le film protecteur comprend une couche barrière réalisée en thermoplastique et un revêtement externe, par exemple réalisé en polyéthylène, partiellement inclus dans la couche barrière en thermoplastique. C'est une solution complexe à mettre en oeuvre et coûteuse.

Il existe donc un besoin pour une courroie de transmission de puissance présentant d'excellentes performances pour répondre aux contraintes mécaniques et/ou thermiques et/ou acoustiques qui sont désormais exigées.

A cet effet, l'invention propose une courroie de transmission de puissance présentant une denture en élastomère à base d'élastomère éthylène alpha oléfine pourvue d'un film externe, caractérisé en ce que le film externe est réalisé à base d'un thermoplastique oléfinique, ledit thermoplastique du film étant associé à un élastomère silicone représentant au moins 20% en poids du poids total du film et à un élément compatibilisant pour assurer, au sein du film, la compatibilité du thermoplastique et de l'élastomère silicone.

Cette courroie pourra également présenter l'une au moins des caractéristiques suivantes, prise seule ou en combinaison :

- l'élastomère silicone représente entre 20% et 80% en poids, du poids total du film et de préférence entre 20% et 60% ;
- l'élastomère silicone représente entre 25% et 50% en poids, du poids total du film ;
- l'élément compatibilisant représente moins de 10% en poids, du poids total du film ;
- le thermoplastique du film comprend au moins 30% de polyéthylène, en poids par rapport au poids total du thermoplastique ;
- le thermoplastique du film comprend entre 30% et 100 % de polyéthylène et notamment entre 50% et 100% de polyéthylène, en poids par rapport au poids total du thermoplastique ;

- le thermoplastique du film comprend entre 75% et 100% de polyéthylène, en poids par rapport au poids total du thermoplastique ;
- le thermoplastique du film est constitué par un mélange de polyoléfines contenant du polyéthylène ;
- le thermoplastique du film est constitué par un copolymère à base de polyéthylène, par exemple un copolymère éthylène octène-polyéthylène ;
- ledit élastomère éthylène alpha oléfine de la denture est un EPDM ou un EPM ;
- l'élément compatibilisant est constitué d'au moins une polyoléfine fonctionnalisée et/ou d'un polyorganosiloxane ;
- le film comprend également des particules choisies parmi les particules de graphite, de noir de carbone, de bisulfure de molybdène, de polytétrafluoroéthylène, de dioxyde de titane de silice ;
- l'épaisseur du film est comprise entre 50 μm et 500 μm.

L'invention sera mieux comprise et d'autres buts, avantages et caractéristiques de celle-ci apparaîtront plus clairement à la lecture de la description qui suit et qui est faite au regard des dessins annexés, sur lesquels :

- la figure 1 représente la durée de vie de différentes courroies, dont l'une est une courroie conforme à l'invention ;
- la figure 2 représente un dispositif expérimental utilisé pour mesurer la durée de vie de la courroie ;
- la figure 3 représente l'abrasion de différentes courroies, dont l'une est une courroie conforme à l'invention (Niveau 10: Courroie neuve (sans pilling), niveau 8: légère poudrette fond déni, niveau 6: agglomération 1/3 hauteur dent, niveau 4: agglomération 1/2 hauteur dent, niveau 2: agglomération hauteur dent totale) ;
- la figure 4 représente également l'abrasion des courroies représentées sur la figure 3, avec un autre test d'abrasion ;
- la figure 5 est un schéma d'une installation expérimentale utilisée pour mesurer le coefficient de frottement de différentes courroies avec une poulie ;
- la figure 6 est un schéma, selon une vue de face, d'un banc moteur automobile utilisé pour mesurer l'abrasion d'une courroie.

Dans le cadre de l'invention, la courroie de transmission de puissance présente une denture en élastomère à base d'élastomère éthylène alpha oléfinique pourvue d'un film externe.

Ce film externe est réalisé à base d'un thermoplastique oléfinique. Ce thermoplastique est associé, au sein du film, à un élastomère silicone représentant au moins 20% en poids du poids total du film et à un élément compatibilisant pour assurer la compatibilité du thermoplastique et de l'élastomère silicone.

L'élastomère formant la denture à base d'éthylène alpha oléfine peut être l'éthylène-propylène-diène-monomère (EPDM) ou l'éthylène-propylène-monomère (EPM). Dans ce cas, l'agent de réticulation de la denture est généralement de type peroxyde.

Le thermoplastique du film, oléfinique, est alors un thermoplastique capable de co-réticuler avec l'agent de type peroxyde de l'élastomère de la denture.

Par exemple, ce thermoplastique comprendra du polyéthylène, avantageusement dans une proportion en poids de 30% par rapport au poids total du thermoplastique.

Avantageusement, le thermoplastique du film comprendra entre 30% et 100% de polyéthylène et notamment entre 50% et 100% de polyéthylène, en poids par rapport au poids total du thermoplastique.

Encore plus avantageusement, le thermoplastique du film comprendra entre 75% et 100% de polyéthylène, en poids par rapport au poids total du thermoplastique.

Selon un autre exemple, le thermoplastique oléfinique du film sera constitué par un mélange de polyoléfines contenant du polyéthylène.

Selon un autre exemple, le thermoplastique oléfinique du film sera constitué par un copolymère à base de polyéthylène, par exemple un copolymère éthylène-octène-polyéthylène.

Plus généralement, le thermoplastique du film pourra être constitué soit d'homopolymères, soit de copolymères qui seront à base d'éthylène si la gomme de denture est à base d'éthylène alpha oléfine, toujours afin d'améliorer l'adhésion entre le film et la gomme de denture.

Bien entendu, le thermoplastique du film peut également être réalisé avec des homopolymères ou des copolymères à base de propylène, d'octène, de butène, de butadiène, de pentène, etc..., en fonction de la nature de l'élastomère constituant la denture, pour assurer une bonne adhésion entre le film et la gomme de denture.

En effet, la présence de polyéthylène dans le film permet d'assurer une très bonne adhésion par co-réticulation avec l'éthylène alpha oléfine contenu dans la denture, notamment l'EPDM ou l'EPM, grâce à la présence d'un système de réticulation de type peroxyde.

Quant à lui, l'élastomère silicone pourra comprendre une ou plusieurs silicone(s). Par exemple, il peut s'agir d'un élastomère silicone liquide bi-composants.

De plus, et à titre d'exemple, l'élément permettant de rendre compatible le thermoplastique oléfinique du film (par exemple à base de (poly-)éthylène) et l'élastomère silicone afin de former un mélange homogène dans le film est alors constitué d'au moins une polyoléfine fonctionnalisée et/ou d'un polyorganosiloxane.

Dans la suite, cet élément sera nommé élément compatibilisant.

La polyoléfine fonctionnalisée sera avantageusement adaptée à la nature du thermoplastique considéré pour le film. Par exemple, un élément compatibilisant de type polyoléfine polypropylène sera adapté à un thermoplastique de type polyéthylène ou polypropylène.

Nous allons maintenant fournir des résultats expérimentaux (tests) qui permettent de mettre en évidence l'intérêt de l'invention.

### TEST 1 : domaine de l'industrie

Dans le domaine de l'industrie des compresseurs, il s'est avéré que des courroies classiques avec des dentures en BR/CR se bakélisent sous l'effet des contraintes thermomécaniques élevées, ce qui ne permet plus leur fonctionnement normal (D1).

Par ailleurs, des courroies en EPDM standard présentent d'une part, des phénomènes d'arrachement du câblé liés aux contraintes de cisaillement importantes à l'interface gomme/câblé dues à un coefficient de frottement élevé (D2).

Dans les deux cas, la durée de vie de la courroie est donc limitée soit à cause du phénomène de bakélisation (D1), soit à cause de l'arrachement du câblé (D2).

Le test 1 montre qu'une courroie dont la denture est réalisée en EPDM avec un film externe, ci-après nommé film A, à base d'un thermoplastique associée à un élastomère silicone est nettement plus performante, en terme de durée de vie, que les courroies existantes selon D1 ou D2.

Le film A est constitué de 58,3% de polyéthylène, 39,2% d'élastomère silicone et de 2,5% d'élément compatibilisant. Ces proportions sont données en poids, par rapport au poids total du film A.

L'élément compatibilisant est en l'occurrence constitué de polypropylène greffé anhydride maléïque (polyoléfine fonctionnalisée) et de polyorganosiloxane.

La courroie selon l'invention formée avec le film A est nommée « *courroie A* ».

Par ailleurs, la courroie est une courroie PolyV de type J et la denture de la courroie est réalisée en EPDM.

Dans le cadre du test 1, trois essais (D1, D2, courroie avec film A selon l'invention) ont été conduits sur compresseur dans les conditions suivantes :

- diamètre moteur = 18,1 mm,
- diamètre récepteur = 89 mm,
- température = 90°C,
- cycle vitesse/couple : toutes les 42 secondes une montée de la vitesse du moteur de 0 à 17000 tr/mn et du couple récepteur de 0 à 2,78 Nm est effectuée.

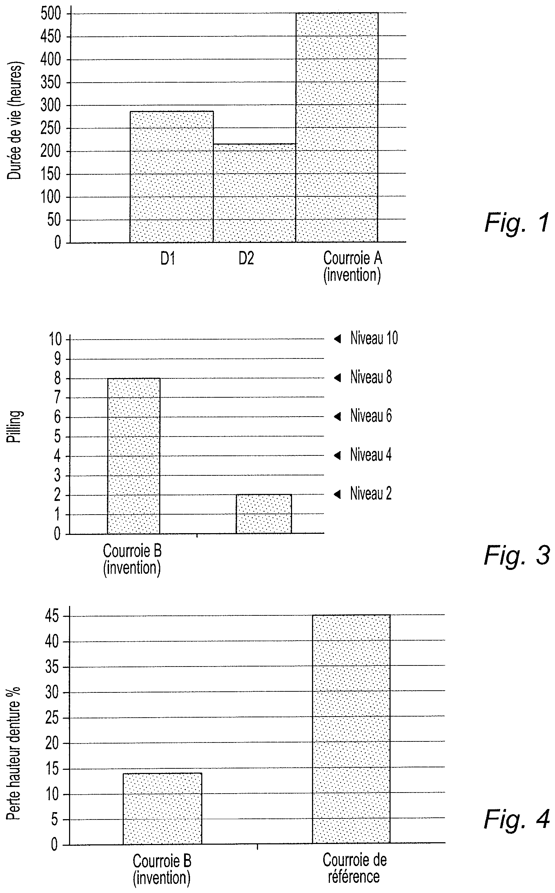

Les résultats des essais sont fournis sur la figure 1.

Comme on peut le constater sur cette figure 1, seule la courroie A a permis d'atteindre une durée de vie dépassant les 500h. La courroie selon D1 n'a pas atteint 300h de durée de vie et la courroie selon D2 n'a, quant à elle, atteint une durée de vie limitée à 200h.

Le test 1 montre donc clairement l'intérêt de la solution proposée par l'invention.

Par ailleurs, il convient de noter qu'aucun problème de bruyance n'a été détecté lors de ces tests.

### TEST 2 : domaine de l'électroménager

Pour le domaine de l'électroménager, une courroie avec un autre type de film, ci-après nommé film B, a été testée.

Dans ce domaine, il convient de noter que les contraintes mécaniques et d'abrasion sont élevées. On observe donc des durées de vie limitées.

La structure de cette courroie comportant le film B est *« standard »* pour une application électroménager, à savoir une courroie PolyV de type J.

Par ailleurs, sa denture est réalisée en EPDM.

Le film B est quant à lui constitué de 58% de polyéthylène, de 38,7% d'élastomère silicone et de 3,3% d'élément compatibilisant. Ces proportions sont données en poids, par rapport au poids total du film B.

L'élément compatibilisant est en l'occurrence constitué de polypropylène greffé anhydride maléïque (polyoléfine fonctionnalisée) et de polyorganosiloxane.

Cette courroie est par la suite nommée « courroie B ».

Trois tests ont été effectués (test 2.1 dit « balourd » pour mesurer la durée de vie de la courroie ; test 2.2 correspondant en fait à une mesure dite de « pilling » qui traduit l'aptitude de l'abrasion à se ré-agglomérer en fond de dent, effectué juste après le test « balourd » et ; test 2.3 « *abrasion* »).

*Test 2.1 : Balourd.*

La courroie B a été testée en comparaison avec une courroie de référence. La courroie de référence est une courroie PolyV de type J, dont la denture est réalisée en BR/CR, sans film externe.
Les conditions des essais réalisés pour le test 2.1. sont les conditions suivantes :

- diamètre de la poulie motrice = 15 mm ;
- diamètre de la poulie réceptrice = 300 mm ;
- vitesse moteur de 1500 tr/mn avec une masse M = 8,6 kg (balourd) dont le centre de gravité G est placé à une distance d = 315 mm de l'axe de rotation R de la poulie réceptrice (ce qui correspond à un couple moyen récepteur de 18,7 N.m et un couple maximum de 29,4 N.m) ;
- température = ambiante (20-25°C).

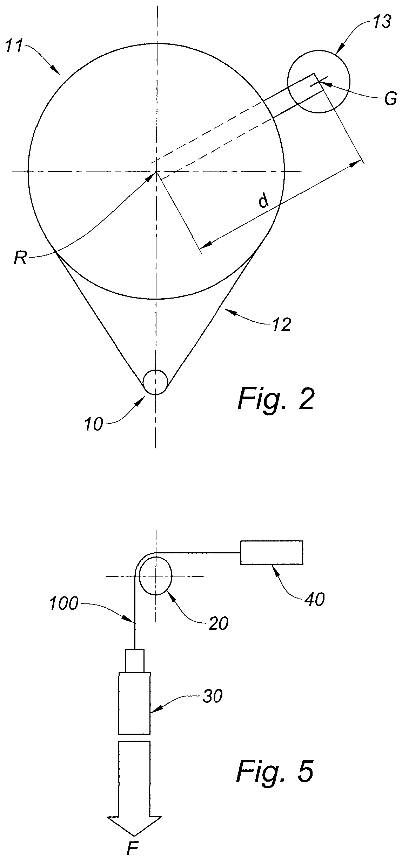

Le dispositif expérimental est représenté sur la figure 2. Sur cette figure, on note la présence de la poulie motrice 10, de la poulie réceptrice 11, de la courroie 12 (courroie B) passant par les deux poulies 10, 11 et du balourd 13.
Le tableau 1 fournit ci-après montre que la « courroie B selon l'invention » présente une durée de vie (170h) environ 2,8 fois plus élevée que la durée de vie (60h) de la courroie de « référence ».

Tableau 1

|  | Durée de vie (h) | Durée de vie sur Base 100 | Mode de dégradation |
|---|---|---|---|
| Courroie B; invention | 170 | 283 | Arrachements câblés et 2 arrachements dents |
| Référence | 60 | 100 | 4 arrachements cablés |

*Test 2.2 : « Pilling », caractérisant l'abrasion subie par la courroie.*

Après avoir effectué le test « *balourd* », chacune des deux courroies B et de référence a fait l'objet d'une mesure de « *pilling* », dont les résultats sont présentés sur la figure 3.
En ordonnée, est représenté la mesure de « *pilling* » qui traduit l'aptitude de l'abrasion à se ré-agglomérer en fond de dent. Une courroie neuve, qui n'a pas d'abrasion, présente une valeur de « *pilling* » de 10 et une courroie abrasée un « *pilling* » strictement inférieur à 10. Ainsi, plus une courroie contient de la ré-agglomération en fond de dent et plus la valeur de « *pilling* » est faible.
Sur cette figure 3, on observe que la courroie B a subi une ré-agglomération bien plus faible que la courroie de référence. Plus précisément, on observe un facteur 4 entre ces deux courroies sur la valeur du « *pilling* ».
La courroie B présente donc une aptitude à la non ré-agglomération bien plus élevée que les courroies connues dans le domaine de l'électroménager.

*Test 2.3 : abrasion subie par la courroie, test complémentaire.*

Un test d'abrasion des courroies B et de référence, complémentaire au test de « *pilling* », a également été réalisé.
Ce test est effectué à l'aide d'un abrasif disposé en contact avec chaque courroie. Les conditions de ce test sont les suivantes, pour les deux courroies :

- Diamètre poulie (lisse, à savoir qu'elle ne comporte pas de dent comme cela peut être le cas pour un galet) = 60 mm ;
- Vitesse de rotation de la poulie = 20 tours/mn ;
- Température : ambiante (20-25°C) ;
- Durée du test : 2 mn 30s ;
- Masse générant une force F = 1,75 daN
- Caractéristique de l'abrasif : toile Corindon de grain 240

Le dispositif expérimental utilisé est celui de la figure 5 décrit ci-après pour le test 4, à l'exception du fait que la poulie est équipée, sur sa circonférence et pour ce test 2.3., de l'abrasif.
Les résultats de ces essais sont fournis sur la figure 4, sur laquelle l'ordonnée précise la perte de hauteur relative (%) de la denture par rapport la hauteur de cette denture à l'état neuf de la courroie.

La courroie B ne présente qu'une perte relative de 14% de la hauteur de la denture, tandis que la courroie de « *référence* » présente une perte relative de 45% de cette hauteur de dent, soit plus de trois fois plus.

Le test 2.3 vient donc confirmer les résultats du test 2.2, à savoir que la courroie B présente un meilleur comportement à l'abrasion que les courroies connues dans le domaine de l'électroménager.

Par ailleurs, il convient de noter qu'aucun problème de bruyance n'a été détecté lors de ces tests.

## TEST 3 : domaine automobile

Dans le domaine automobile, on observe des phénomènes de bruyance voire plus généralement des contraintes acoustiques en conditions sèches ou humides avec les courroies existantes.

Pour mettre en évidence l'intérêt de l'invention, on a testé une courroie Poly V de type K, dont la denture est réalisée en EPDM et pourvue d'un film A tel que décrit précédemment. Cette courroie est nommée ci-après *« courroie D »*.

La courroie D a été comparée à deux autres courroies de référence, actuellement utilisées sur le marché. La désignation normalisée de toutes ces courroies (D, REFI ,REFII) est 1200 PK 6.

La première courroie de référence, ci-après nommée *« courroie REF I »* présente les caractéristiques suivantes : courroie PolyV de type K dont la denture est réalisée en EPDM et associée à un Flock de surface en polyamide.

La deuxième courroie de référence, ci-après nommée *« courroie REF II »*, présente les caractéristiques suivantes : courroie PolyV de type K dont la denture est réalisée en EPDM et associée à un film externe muni d'un non tissé en surface.

Le test 3 a fait l'objet de trois sous-tests différents, à savoir un test 3.1 acoustique effectué en conditions sèches, un test 3.2 acoustique effectué en conditions humides et un test 3.3 d'abrasion.

### *Test 3.1 : acoustique en conditions dites sèches*.

Le test 3.1 consiste en un test acoustique (bruit) sur banc de désalignement conçu sur la base de la norme SAE J2432-2000.

Avant d'effectuer la mesure, la courroie est conditionnée au préalable pendant au moins 4 heures, à une température de 20°C et à un taux d'humidité relative de 50%.

Le test est alors effectué dans des conditions dites sèches.

Lors du test, la poulie motrice tourne à 2000 tr/mn et la tension appliquée sur la courroie est constante.

La mesure consiste à déterminer l'angle de désalignement entre la poulie motrice et la poulie menée auquel apparaît le grincement. Le grincement est caractérisé par un bruit audible.

Les résultats sont fournis dans le tableau 2. Dans ce tableau 2, c'est la courroie REF I qui sert de référence à la fois à la courroie REF II et à la courroie D, conforme à l'invention.

Tableau 2

|  | état | grincement |
|---|---|---|
| Courroie D (invention) | neuve | = |
|  | rodée | + |
| Courroie REF II | neuve | = |
|  | rodée | + |
| Courroie REF I | neuve | référence |
|  | rodée | référence |

A l'état neuf, les trois courroies présentent des performances comparables.

A l'état rodée, la courroie D selon l'invention est meilleure que la courroie REF I. Cela signifie que l'angle de désalignement entre les poulies à partir duquel on entend le grincement avec la courroie D est supérieur à l'angle auquel ce grincement est identifié avec la courroie REF I.

Par ailleurs, à l'état rodée, la courroie D selon l'invention présente des performances comparables à celles de la courroie REF II.

La courroie D selon l'invention présente donc des caractéristiques acoustiques tout à fait intéressantes.

*Test 3.2 : acoustique en conditions humides.*

Le test 3.2 consiste à placer la courroie D sur un moteur thermique DW8 de cinématique 5 axes (accessoires : alternateur et direction assistée seulement). Ce moteur est un moteur série du commerce, connu de l'homme du métier.

La tension de pose de la courroie est de 115 N/dt/b (Newton/dent/brin). Cette tension est obtenue par le réglage d'un tendeur de courroie.

On procède à la mise en rotation du moteur au ralenti sans charge accessoire pendant une durée de 15 minutes.

Puis, on asperge la courroie pendant une durée de 30s avec une quantité de 300ml d'eau.

Ensuite, on laisse tourner le moteur au ralenti sans charge d'accessoires pendant une durée de 15 minutes.

Le moteur tournant toujours au ralenti, on procède alors à la mise en charge simultanée de l'alternateur (en l'occurrence de 70A) et de la direction assistée (fonctionnant à 50 bars) en aspergeant la courroie pendant une durée de 30s, avec une quantité de 300ml d'eau.

On laisse à nouveau tourner le moteur au ralenti sans charge d'accessoires pendant 15 minutes.

Enfin, on procède à nouveau à la mise en charge simultanée de l'alternateur et de la direction assistée en aspergeant la courroie pendant une durée de 5s, avec une quantité de 5ml d'eau.

La mesure est effectuée lors de cette dernière aspersion.

Cette mesure consiste à mesurer le temps écoulé entre le début de l'aspersion de la courroie (début de la mesure), laquelle coïncide avec l'apparition d'un bruit audible, et le moment où ce bruit n'est plus audible (fin de la mesure).

Les conditions de test décrites ci-dessus sont appliquées que la courroie testée soit neuve ou préalablement rodée.

Les résultats sont fournis dans le tableau 3. Dans ce tableau 3, c'est la courroie REF I qui sert de référence à la fois à la courroie REF II et à la courroie D, conforme à l'invention.

Tableau 3

|  | Etat | Durée du bruit |
|---|---|---|
| Courroie D (invention) | neuve | + |
|  | rodée | + |
| Courroie REF II | neuve | + |
|  | rodée | + |
| Courroie REF I | neuve | référence |
|  | rodée | référence |

Dans ce tableau 3, la colonne « *Durée du bruit* » traduit le temps qui s'écoule entre le début de la mesure et la fin de la mesure. Plus ce temps est court, meilleure est la performance de la courroie. Ainsi, vis-à-vis de la courroie de référence REF I, un signe « + » indique une durée de bruit plus courte, dans des conditions de tests identiques.

A l'état neuve comme à l'état rodée, la courroie D selon l'invention présente des caractéristiques améliorées par rapport à la courroie REF I.

Par ailleurs, à l'état neuve comme à l'état rodée, la courroie D selon l'invention présente des caractéristiques comparables à celles de la courroie REF II.

*Test 3.3 abrasion*

Le test 3.3 consiste à faire tourner la courroie sur un banc 3 axes entraîné par un moteur Diesel G9T au ralenti pendant 31 h.

Le moteur G9T est un moteur série du commerce. Cependant, dans la cadre de ce test, celui-ci n'est utilisé que comme moyen d'entraînement.

La tension de pose de la courroie D est de 115 N/dt/b (*Newton/dent/brin*). Cette tension est obtenue par le réglage d'un tendeur de courroie.

Le moteur entraîne en rotation une inertie de 5 g.m$^2$.

Le banc 3 axes utilisé est spécifique à ce test. Ainsi, la position des accessoires et les diamètres des poulies sont spécifiques à ce test.

Le tableau 4 ci-dessous présente les différentes caractéristiques du banc utilisé pour ce test.

Tableau 4

| Poulie | Diamètre effectif (mm) | Position x (mm) | Position y (mm) |
|---|---|---|---|
| 1 Vilebrequin ( moteur G9T) | 150 | 0 | 0 |
| 2 Galet Fixe | 60 | 118 | 218 |
| 3 Alternateur (Inertie 5gm$^2$) et Réglage tension | 54,45 | -232,2 | 232,2 |

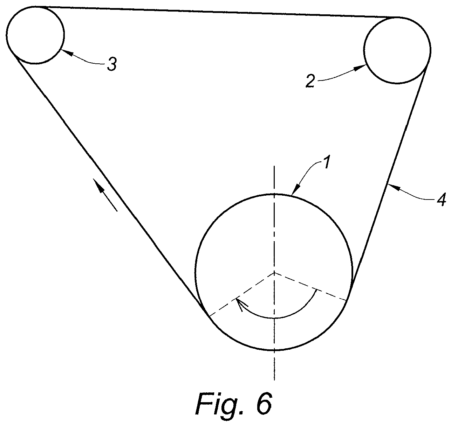

La figure 6 schématise le banc utilisé. En particulier, il convient de noter que les positions relatives des différents éléments du banc qui sont mentionnées dans le tableau 4 peuvent être visualisées sur la figure 5. Sur cette figure 6, la poulie vilebrequin est notée 1, le galet fixe 2, la poulie d'alternateur 3 et la courroie 4.

Le ralenti Diesel est connu pour ses irrégularités cycliques de vitesses instantanées. Ces irrégularités génèrent des couples dynamiques cycliques (sous l'effet de l'inertie entraînée), qui provoquent l'abrasion de la courroie sous l'effet des glissements de contact la courroie et les différentes poulies par lesquelles cette courroie passe.

L'abrasion A de la courroie est définie par un pourcentage (%). Ce pourcentage d'abrasion est calculé en mesurant la masse de la courroie D à l'état neuf ($M_0$) et sa masse l'issue du test ($M_{31}$), à savoir après 31 h de ralenti.

On a ainsi:

$$A\ (\%) = 100\% \ ^*(M_0 - M_{31}\ ) \ / \ M_0.$$

Pour mettre en évidence l'intérêt de l'invention, la courroie D a été comparée aux courroies REF I et REF II.

Les résultats sont donnés dans le tableau 5 ci-dessous :

Tableau 5

| | Abrasion ( % ) |
|---|---|
| Courroie D ( invention ) | 0,46 |
| Courroie REF II | 1 |
| Courroie REF I | 1,27 |

Du tableau 5, on déduit que la courroie D selon l'invention présente une meilleure résistance à l'abrasion que les deux courroies de référence REF I et REF II.

**AUTRES TESTS: influence de la proportion d'élastomère silicone dans le film.**

Tous les tests qui précèdent ont été effectués pour des courroies avec différents films (film A ou B), pour lesquels la proportion relative en poids d'élastomère silicone est d'environ 38-40%.

Afin de déterminer l'influence de la proportion d'élastomère silicone dans le film sur les propriétés de la courroie selon l'invention, un test 4 a été réalisé, en faisant plusieurs essais avec différentes proportions d'élastomère silicone.

Le test 4 est présenté ci-dessous.

Les résultats présentés dans le test 4 sont applicables pour tous les domaines d'application envisageables, tels que les domaines de l'industrie, de l'électroménager ou de l'automobile.

Ces tests visent à déterminer l'influence de la proportion de silicone présente dans le film sur la résistance à l'abrasion, la durée de vie et le coefficient de frottement de la courroie testée.

Le test d'abrasion correspond au test 2.3 décrit précédemment (utilisation d'un abrasif).

Le test de durée de vie correspond au test 2.1 décrit précédemment (test dit « *balourd* », avec lequel le mode de dégradation constatée est soit un arrachement de la denture, soit un arrachement du câblé).

Enfin, un dernier test, à savoir le test 4, vise à déterminer le coefficient de frottement (COF) de la courroie avec la poulie.

Pour ce test 4, on dispose la courroie 100 concernée sur une poulie 20. Une extrémité de la courroie est montée sur une masse 30 générant une force F de 1,75daN, l'autre extrémité étant montée sur un bâti, au niveau duquel la tension T exercée sur la courroie est mesurée par un moyen de mesure adapté 40, tel qu'un capteur d'effort. Le diamètre de la poulie 20 est de 60mm et elle est mise en rotation à une vitesse de 43 tours/mn pendant la durée du test, qui est de 2 mn.

Un schéma représentatif du dispositif utilisé pour la mise en oeuvre du test 4 est représenté sur la figure 5.

Le coefficient de frottement COF est alors déterminé par la relation suivante :

$$COF = (1/\alpha)*\ln(T-F)$$

où :

α est l'angle d'enroulement de la courroie autour de la poulie, à savoir ici α = π/2 (rad);
ln, le logarithme népérien ;
T, la tension mesurée à l'une des extrémités de la courroie (N); et
F, la force générée par la masse disposée à l'autre extrémité de la courroie (N).

Les courroies conformes à l'invention testées sont des courroies polyV de type J, dont la denture est réalisée en EPDM. Cependant, les comparaisons observées avec les courroies polyV de type J sont transposables à d'autres types de courroies, telles que les courroies de type K.

Le film externe est quant à lui à base de d'éthylène et peut comprendre respectivement 29,3 %, 38,7 et 48,8% d'élastomère silicone.

Plus précisément, le premier film comprend 68,3% de polyéthylène, 29,3% d'élastomère silicone et 2,4% d'élément compatibilisant.

Le deuxième film comprend 58% de polyéthylène, 38,7 d'élastomère silicone et 3,3% d'élément compatibilisant.

Enfin, le troisième film comprend 48,8% de polyéthylène, 48,8% d'élastomère silicone et 2,4% d'élément compatibilisant.

Toutes ces proportions sont données en poids, par rapport au poids total du film.

La courroie de l'art antérieur correspond à la courroie selon D1 (cf. TEST 1), à savoir une courroie dont les dentures sont en BR/CR, sans film externe.

Les résultats sont présentés dans le tableau 6 ci-dessous.

Tableau 6

|  | silicone (%) | Test 2.3 (abrasion, base 100) | Test 2.1 (durée de vie, base 100) | Test 4 (COF) |
|---|---|---|---|---|
| Courroie de l'invention | 29,3 | 16,7 | 221 | 1 |
|  | 38,7 | 31,1 | 283 | 0,85 |
|  | 48,8 | 55,6 | non mesurée | 0,7 |
| Courroie selon D1 (art antérieur) | - | 100 | 100 | 1,8 |

Ces tests montrent que toutes les courroies conformes à l'invention présentent une meilleure résistance à l'abrasion, une durée de vie accrue et un coefficient de frottement plus faible, c'est-à-dire susceptibles de générer un niveau de bruyance plus faible, par rapport à la courroie de l'art antérieur.

Ces tests montrent également que, pour une courroie conforme à l'invention, plus la proportion d'élastomère silicone dans le film augmente et plus l'abrasion de la courroie augmente. Et, plus la proportion d'élastomère silicone augmente dans le film, plus la durée de vie augmente.

Il ressort de ces tests que la proportion de silicone peut être sélectionnée pour ajuster le niveau d'abrasion et la durée de vie de la courroie.

Par ailleurs, il convient de noter que la proportion de silicone dans le film permet de régler le coefficient de frottement de la courroie sur la poulie. Ces tests mettent ainsi en évidence que, pour une courroie selon l'invention, plus le COF augmente et plus la durée de vie de la courroie diminue. Ils mettent également en évidence que plus le COF augmente et plus le niveau d'abrasion diminue, ce qui est lié au fait qu'il y alors moins de glissement. Par ailleurs, plus le COF augmente et plus le niveau de bruyance généré par la courroie est susceptible d'augmenter.

Ainsi, la proportion d'élastomère silicone dans le film permet de régler le niveau d'abrasion de la courroie (contrainte mécanique), sa durée de vie (contrainte mécanique liée aux problèmes d'arrachement de la denture ou du câblé) ainsi que son niveau de bruyance (contrainte acoustique).

Une composition élastomérique comportant un thermoplastique, du silicone et un élément compatibilisant, ainsi que son procédé de fabrication étaient déjà connus du document FR-2 959 235.

Toutefois, ce document n'identifiait pas l'intérêt d'une telle composition pour son application en tant que film externe sur une courroie de transmission de puissance pour résoudre les problèmes spécifiques liées aux courroies de transmission de puissance.

Par voie de conséquence, l'intérêt que cette composition pouvait avoir pour diminuer l'abrasion de la courroie, augmenter sa durée de vie en évitant l'arrachement du câble de la courroie ou la denture de cette courroie, ou encore diminuer son niveau de bruyance n'était nullement évident pour un homme du métier exerçant dans le domaine des courroies de transmission de puissance.

Il convient enfin de noter que, dans le cadre de l'invention, l'élastomère silicone pourra représenter entre 20% et 90% en poids, du poids total du film.

L'élastomère silicone pourra plus précisément représenter entre 20% et 80% en poids, du poids total du film.

Avantageusement, l'élastomère silicone représentera entre 20% et 70% en poids, du poids total du film.

Plus avantageusement, l'élastomère silicone représentera entre 20% et 60% en poids, du poids total du film.

Encore plus avantageusement, l'élastomère silicone représentera entre 20% et 50% en poids, du poids total du film.

Cette proportion, définie comme précédemment, peut encore être choisie entre 25% et 50% ou entre 29% et 49%.Pour fabriquer une courroie conforme à l'invention, on pourra envisager le procédé suivant :

a) application du film sur une face dite active ou externe d'une ébauche de courroie non vulcanisée, ledit film étant de préférence en un matériau ayant au début de cette étape un module d'Young supérieur à celui de l'élastomère à l'état cru de la denture,

b) vulcanisation de l'ensemble pour former une courroie dont la face externe présente une denture revêtue dudit film.

Par ce procédé, aucun textile tissé ou non tissé ou encore de tricot n'est alors prévu au sein du film externe.

## Revendications

1. Courroie de transmission de puissance présentant une denture en élastomère à base d'élastomère éthylène alpha oléfine pourvue d'un film externe, ledit film externe est réalisé à base d'un thermoplastique oléfinique, **caractérisé en ce que** ledit thermoplastique du film étant associé à un élastomère silicone représentant au moins 20% en poids du poids total du film et à un élément compatibilisant pour assurer, au sein du film, la compatibilité du thermoplastique et de l'élastomère silicone.

2. Courroie selon la revendication 1, dans lequel l'élastomère silicone représente entre 20% et 80% en poids, du poids total du film et de préférence entre 20% et 60%.

3. Courroie selon l'une des revendications précédentes, dans lequel l'élastomère silicone représente entre 25% et 50% en poids, du poids total du film.

4. Courroie selon l'une des revendications précédentes, dans lequel l'élément compatibilisant représente moins de 10% en poids, du poids total du film.

5. Courroie selon l'une des revendications précédentes, dans lequel le thermoplastique du film comprend au moins 30% de polyéthylène, en poids par rapport au poids total du thermoplastique.

6. Courroie selon la revendication précédente, dans lequel le thermoplastique du film comprend entre 30% et 100 % de polyéthylène et notamment entre 50% et 100% de polyéthylène, en poids par rapport au poids total du thermoplastique.

7. Courroie selon l'une des revendications 5 ou 6, dans lequel le thermoplastique du film comprend entre 75% et 100% de polyéthylène, en poids par rapport au poids total du thermoplastique.

8. Courroie selon la revendication 5, dans lequel le thermoplastique du film est constitué par un mélange de polyoléfines contenant du polyéthylène.

9. Courroie selon la revendication 5, dans lequel le thermoplastique du film est constitué par un copolymère à base de polyéthylène, par exemple un copolymère éthyléne octène-polyéthylène.

10. Courroie selon l'une des revendications précédentes, dans lequel ledit élastomère éthylène alpha oléfine de la denture est un EPDM ou un EPM.

**11.** Courroie selon l'une des revendications précédentes, dans lequel l'élément compatibilisant est constitué d'au moins une polyoléfine fonctionnalisée et/ou d'un polyorganosiloxane.

**12.** Courroie selon l'une des revendications précédentes, dans lequel le film comprend également des particules choisies parmi les particules de graphite, de noir de carbone, de bisulfure de molybdène, de polytétrafluoroéthylène, de dioxyde de titane de silice.

**13.** Courroie selon l'une des revendications précédentes, dans lequel l'épaisseur du film est comprise entre 50 μm et 500 μm.

**Patentansprüche**

**1.** Antriebsriemen, der eine Verzahnung aus Elastomer auf Alpha-Olefin-Ethylen-Elastomerbasis aufweist, die mit einer äußeren Folie versehen ist, wobei die äußere Folie basierend auf einem olefinischen Thermoplast ausgeführt ist, **dadurch gekennzeichnet**, das der Thermoplast der Folie mit einem Silikonelastomer, das mindestens 20 Gew.-% des Gesamtgesichts der Folie darstellt, und mit einem verträglich machenden Element verbunden ist, um innerhalb der Folie die Verträglichkeit des Thermoplasts und des Silikonelastomers zu gewährleisten.

**2.** Riemen nach Anspruch 1, wobei das Silikonelastomer zwischen 20 und 80 Gew.-% des Gesamtgewichts der Folie und vorzugsweise zwischen 20 und 60% darstellt.

**3.** Riemen nach einem der vorhergehenden Ansprüche, wobei das Silikonelastomer zwischen 25 und 50 Gew.-% des Gesamtgewichts der Folie darstellt.

**4.** Riemen nach einem der vorhergehenden Ansprüche, wobei das verträglich machende Element mindestens 10 Gew.-% des Gesamtgewichts der Folie darstellt.

**5.** Riemen nach einem der vorhergehenden Ansprüche, wobei der Thermoplast der Folie mindestens 30 Gew.-% Polyethylen im Verhältnis zum Gesamtgewicht des Thermoplasts umfasst.

**6.** Riemen nach dem vorhergehenden Anspruch, wobei der Thermoplast der Folie zwischen 30 und 100 Gew.-% Polyethylen und insbesondere zwischen 50 und 100 Gew.-% Polyethylen im Verhältnis zum Gesamtgewicht des Themoplasts umfasst.

**7.** Riemen nach einem der Ansprüche 5 oder 6, wobei der Thermoplast der Folie zwischen 75 und 100 Gew.-% Polyethylen im Verhältnis zum Gesamtgewicht des Thermoplasts umfasst.

**8.** Riemen nach Anspruch 5, wobei der Thermoplast der Folie aus einer Mischung von Polyolefinen besteht, die Polyethylen enthalten.

**9.** Riemen nach Anspruch 5, wobei der Thermoplast der Folie aus einem Copolymer auf Polyethylenbasis, zum Beispiel einem Polyethylen-Ethylen-Octen-Copolymer, besteht.

**10.** Riemen nach einem der vorhergehenden Ansprüche, wobei das Alpha-Olefin-Ethylen-Elastomer der Verzahnung ein EPDM oder ein EPM ist.

**11.** Riemen nach einem der vorhergehenden Ansprüche, wobei das verträglich machende Element aus mindestens einem funktionalisierten Polyolefin und/oder aus einem Polyorganosiloxan besteht.

**12.** Riemen nach einem der vorhergehenden Ansprüche, wobei die Folie auch Teilchen umfasst, die unter Graphit-, Ruß-, Molybdändisulfid-, Polytetrafluorethylen-, Silizium-Titandioxidteilchen ausgewählt werden.

**13.** Riemen nach einem der vorhergehenden Ansprüche, wobei die Dicke der Folie zwischen 50 μm und 500 μm enthalten ist.

**Claims**

1. A power transmission belt presenting elastomer teeth based on ethylene alpha olefin elastomer provided with an outer film, said outer film is made on the basis of an olefin thermoplastic, **characterized in that** said thermoplastic of the film being associated with a silicone elastomer representing at least 20% by weight of the total weight of the film and with a compatibilizer element for ensuring compatibility between the thermoplastic and the silicone elastomer within the film.

2. A belt according to claim 1, wherein the silicone elastomer represents 20% to 80% by weight of the total weight of the film, and preferably 20% to 60%.

3. A belt according to any preceding claim, wherein the silicone elastomer presents 25% to 50% by weight of the total weight of the film.

4. A belt according to any preceding claim, wherein the compatibilizer element represents less than 10% by weight of the total weight of the film.

5. A belt according to any preceding claim, wherein the thermoplastic of the film comprises at least 30% polyethylene by weight relative to the total weight of the thermoplastic.

6. A belt according to the preceding claim, wherein the thermoplastic of the film comprises 30% to 100% polyethylene and in particular 50% to 100% polyethylene by weight relative to the total weight of the thermoplastic.

7. A belt according to claim 5 or claim 6, wherein the thermoplastic of the film comprises 75% to 100% polyethylene by weight relative to the total weight of the thermoplastic.

8. A belt according to claim 5, wherein the thermoplastic of the film is constituted by a mixture of polyolefins containing polyethylene.

9. A belt according to claim 5, wherein the thermoplastic of the film is constituted by a copolymer based on polyethylene, e.g. an ethylene octene-polyethylene copolymer.

10. A belt according to any preceding claim, wherein said ethylene alpha olefin elastomer of the teeth is an EPDM or an EPM.

11. A belt according to any preceding claim, wherein the compatibilizer element is constituted at least by a functionalized polyolefin and/or a polyorganosiloxane.

12. A belt according to any preceding claim, wherein the film also includes particles selected from particles of graphite, carbon black, molybdenum bisulfide, polytetrafluoroethylene, and/or silica titanium dioxide.

13. A belt according to any preceding claim, wherein the thickness of the film lies in the range 50 $\mu$m to 500 $\mu$m.

*Fig. 1*

*Fig. 3*

*Fig. 4*

11

13

G

d

R

12

10

*Fig. 2*

100

20

40

30

F

*Fig. 5*

*Fig. 6*

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102008055530
- FR 2779731
- FR 2898171
- FR 2936291
- FR 2959235